# EUROPEAN PATENT APPLICATION

(11) **EP 4 257 302 A1**
(43) Date of publication of application: **11.10.2023**
(21) Application number: 23160319.2
(22) Date of filing: 07.03.2023
(51) Int. Cl.: B25J 9/16, G05B 19/418

(54) **APPARATUS AND METHOD FOR UPDATING A GROUP OF ROBOTS**

(30) Priority: 04.04.2022 KR 20220041750
(71) Applicant: DOOSAN ROBOTICS INC, Gyeonggi-do 16648 (KR)
(72) Inventor: LEE, Jae Suk, 16648 Suwon-si (Gyeonggi-do) (KR)
(74) Representative: Cabinet Laurent & Charras

(57) **Abstract**

An update apparatus is provided. The update apparatus may comprise: a grouping unit configured to group a plurality of robots using a network; and an update unit configured to update the plurality of grouped robots through the network.

## Description

### CROSS-REFERENCETO RELATED APPLICATION

This application claims priority to Korean Patent Application No. 10-2022-0041750, filed on April 04, 2022 in the Korean Intellectual Property Office, the disclosure of which is incorporated by reference herein in its entirety.

### BACKGROUND

### Field

The present disclosure relates to an apparatus and method for sharing teaching with a plurality of robots or updating a function or a process on the plurality of robots.

### Description of the Related Art

Hardware such as robots and autonomous mobile robots (AMRs) is widely used in various fields.

However, a lot of hardware is driven by limited functions, operation methods, and teaching methods provided to manufacturers. Accordingly, a lot of hardware is applied only to limited operation environments, and managed only by skilled operators.

Accordingly, the popularization of a lot of hardware is delayed.

Korean Patent No. 0819237 discloses a technique of updating a robot platform even without ending a robot.

### SUMMARY

An object of the present disclosure is to provide an update apparatus and method that may perform various updates for a plurality of robots using a cloud at once.

An update apparatus according to the present disclosure may comprise: a grouping unit configured to group a plurality of robots using the same network; and an update unit configured to update the plurality of grouped robots through the network.

The grouping unit and the update unit may be provided in a specific robot among the plurality of robots.

The update may provide at least one of a functional module, process information, and teaching information to the robot.

When the grouping unit and the update unit are provided in a management unit of a specific robot, a registration unit configured to register only the specific robot among the plurality of robots on the network may be provided in the management unit.

A collection unit configured to collect a pieces of robot information registered in the network, and a selection unit configured to select robot information to be grouped among the pieces of collected robot information may be provided. The grouping unit may group the robot information selected by the selection unit into one to set the robot information to a specific group. The update unit may update a robot corresponding to the robot information included in the specific group.

The collection unit and the selection unit may be provided in a management unit of a specific robot among the plurality of robots. The management unit may be provided with a display unit configured to display the pieces of robot information collected by the collection unit. The selection unit may select at least some of the pieces of robot information displayed through the display unit.

When updating a specific robot among the plurality of grouped robots, the update unit may display an inquiry menu for inquiring a user whether to update another robot among the plurality of grouped robots.

When the plurality of robots are grouped into a first group, the update unit may transmit guide information indicating the fact that the first robot has been updated to a second robot in the first group when updating a first robot in the first group.

The update unit may display an inquiry menu for inquiring whether to update the second robot when confirming the fact that the second robot has received the guide information.

The update unit may display the inquiry menu for inquiring whether to update a robot corresponding to identification information together with the identification information of each robot whenever receiving confirmation information indicating the fact that the guide information has been received from each robot included in the first group.

The update unit may repeatedly attempt to update a specific robot by the set number of times when the update of the specific robot fails.

The update unit may classify the specific robot as a failure robot whose update has failed when the update to the specific robot fails despite the repeated attempts to update. The update unit may restore a software version of the failure robot to a previous version. The update unit may display the failure robot.

When the plurality of robots are grouped into a first group, the update unit may group a success robot whose update has been successfully performed among the plurality of robots included in the first group into a success group and display the success group.

The update unit may group the failure robot among the plurality of robots included in the first group into a failure group and display the failure group so as to be distinguished from the success group.

An update method according to the present disclosure may comprise: a registering operation of registering robot information on a network; a collecting operation of collecting the robot information registered on the network; a selecting operation of selecting at least some of the pieces of collected robot information; a grouping operation of grouping the selected robots into one group; and an updating operation of attempting to update the remaining robots included in the group using the network when a specific robot included in the group is updated.

The updating operation may display an inquiry menu for inquiring a user whether to update another robot among a plurality of grouped robots when a specific robot among the plurality of grouped robots is updated.

When the plurality of robots are grouped into a first group, the updating operation may transmit guide information indicating the fact that a first robot has been updated to a second robot in the first group when the first robot in the first group is updated.

The updating operation may display an inquire menu for inquiring whether to update the second robot when confirming the fact that the second robot has received the guide information.

The updating operation may repeatedly attempt to update the specific robot by the set number of times when the update to the specific robot fails.

The updating operation may classify the specific robot as a failure robot whose update has failed when the update to the specific robot fails despite repeated attempts to update.

The updating operation may restore a software version of the failure robot to a previous version.

The updating operation may display the failure robot.

According to the present disclosure, the teaching for the plurality of robots that perform similar operations in a specific location can be performed simultaneously.

According to the present disclosure, when the teaching is performed for any one specific robot among the plurality of robots registered in the same network, the teaching progress information or the teaching result can be transmitted to the remaining teaching robots. Accordingly, when the teaching is performed for any one robot, the robot can be in a state similar to that of the robot in which the teaching for the plurality of robots is completed. As a result, according to the update apparatus according to the present disclosure, the teaching for the plurality of robots can be greatly simplified.

In addition, the update apparatus according to the present disclosure may update various function information and process information as well as teaching-related information. The update of the function information and the process information may be produced and set by the customer or the user, unlike the update performed by the manufacturer side. The function information and the like set by the customer cannot use the manufacturer's update communication line. Accordingly, the customer should bear the inconvenience of inserting the recording medium in which update information is stored to perform individual updates while searching for each of the plurality of robots. However, according to the present disclosure, the customer can complete the update of the plurality of robots at the seat of the specific robot among the plurality of robots.

In order to prevent a problem caused by the update for an erroneously designated robot, the update apparatus according to the present disclosure can additionally perform a confirmation procedure for a target robot that will receive update information through a network.

When information for recognizing the execution of the update is received from the target robot, an inquiry menu for asking whether to perform the update on the corresponding target robot can be provided. The customer can reconsider the necessity of performing the update on the target robot through the inquiry menu, and recognize whether the target robot maintains a communication state capable of receiving the update information.

### BRIEF DESCRIPTION OF THE DRAWINGS

The above and other aspects will become more apparent from the following description of the exemplary embodiments with reference to the accompanying drawings, in which:
FIG. 1 is a schematic view showing a management apparatus according to the present disclosure;
FIG. 2 is a schematic view showing an update apparatus according to the present disclosure;
FIG. 3 is a schematic view showing an operation of the update apparatus;
FIG. 4 is a flowchart showing an update method according to the present disclosure;
FIG. 5 is a flowchart showing an update method viewed from the viewpoint of a customer; and
FIG. 6 is a view showing a computing apparatus according to an embodiment of the present disclosure.

### DETAILED DESCRIPTION

Hereinafter, embodiments of the present disclosure will be described in detail with reference to the accompanying drawings so that those skilled in the art to which the present disclosure pertains may easily carry out them. However, the present disclosure may be implemented in various different forms and is not limited to the embodiments described herein. In addition, in order to clearly describe the present disclosure, parts irrelevant to the description in the drawings are omitted, and similar parts are denoted by similar reference numerals throughout the specification.

In this specification, overlapping descriptions of the same components will be omitted.

In addition, in this specification, it should be understood that when it is described that a certain component is 'connected' or 'joined' to another component, a certain component may be directly connected or joined to another component, but other components may also exist therebetween. On the other hand, in this specification, it should be understood that when it is described that a certain component is 'directly connected' or 'directly joined' to another component, other components do not exist therebetween.

In addition, the terms used herein are used only to describe specific embodiments, and are not intended to limit the present disclosure.

In addition, in this specification, the singular expression may include the plural expression unless the context clearly dictates otherwise.

In addition, in this specification, it should be understood that the term such as 'include' or 'have' is only intended to designate that the features, numbers, steps, operations, components, parts, or combinations thereof described in the specification exist, and does not preclude the presence or addition possibility of one or more other features, numbers, steps, operations, components, parts, or combinations thereof in advance.

In addition, in this specification, the term 'and/or' includes a combination of a plurality of described items or any item of the plurality of described items. In this specification, 'A or B' may include 'A', 'B', or 'both A and B'.

In addition, in this specification, detailed descriptions of well-known functions and configurations that may obscure the gist of the present disclosure will be omitted.

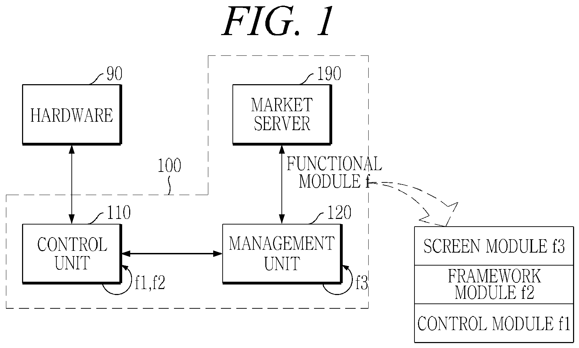

FIG. 1 is a schematic view showing a management apparatus 100 according to the present disclosure.

The management apparatus 100 shown in FIG. 1 may include a control unit 110, a management unit 120, and a market server 190.

The control unit 110 may control a hardware 90. The hardware 90 may include control information provided from the control unit 110, a robot controlled by a control signal, an autonomous mobile robot (AMR), and the like.

The control unit 110 may be a combination of software such as a control program and a processing device in which the software is executed. As an example, the control unit 110 may correspond to the processing device in which the control program for generating the control information of the robot is mounted to be executable.

Functional modules f (including a control module f1, a framework module f2, and the like) for giving specific functions to the hardware 90 may be registered in the market server 190. The functional module f may determine at least one of an operation method and an operation order of the hardware 90. A 'module' described herein may mean a program itself that performs specific functions, or mean a processor, a calculator, a semiconductor chip, and the like in which the corresponding program is mounted and the specific functions are performed through the execution or operation of the corresponding program. The functional module f may include a module for giving the specific functions to hardware (unit, electronic device), such as a robot or AMR controlled by software, or include a module for providing convenient functions to a user.

Even with the same hardware 90, the hardware 90 may have various functions depending on the control unit 110 configured to control the hardware 90.

As an example, when control information for picking up or transporting an object is provided through the control unit 110, a robot corresponding to the hardware 90 may have a function of transporting the object. When information necessary for welding is provided through the control unit 110, the robot may have a function of welding the object. Of course, it may be premised that the hardware 90 end effectors such as grippers and manipulators installed in the robot are replaced with elements such as a welder in terms of the hardware 90 depending on functions.

A functional module for controlling the robot may be registered in the market server 190 so that the robot has the function of transporting the object. In addition, a functional module for controlling the robot may be registered in the market server 190 so that the robot has the function of welding the object.

At this time, the functional module f may include a program, software, and the like for controlling the robot so that the hardware 90 such as the robot performs specific functions (e.g., transporting and welding). Describing from another perspective, the functional module f may generate control information necessary for the hardware 90 to perform the specific functions.

In order to give the specific functions to the robot, it is necessary to download the functional module that causes the robot to perform the corresponding function from the market server 190, and install the downloaded functional module to the control unit 110. To this end, the management unit 120 may be used. A screen module configuring the downloaded functional module may be installed in the management unit. A framework module and a control module configuring the downloaded functional module may be installed in the control unit. Hardware may be controlled through the control module.

The management unit 120 may install the functional module in the control unit 110 or delete the functional module installed in the control unit 110. The management unit 120 may include a personal computer, a desktop computer, a smart phone, a tablet PC, a control unit dedicated to the hardware 90, and the like.

Although the management unit 120 seems to easily manage the functional module, such as installing or deleting the functional module, it should be noted that it is difficult to easily manage the functional module practically.

In general, a manufacturer of the hardware 90 may provide a basic program for controlling the hardware 90 to a customer. However, the corresponding basic program has a structure in which it is difficult to separate functional modules. In other words, it is clear that the basic program includes program codes for allowing functions such as the functional module f to be performed. However, it is very difficult to delete the functional module from the basic program or add a new functional module to the basic program. This is because the basic program generally provided by the manufacturer has a structure in which there is no separable functional module itself, for example, a structure in which specific functions are converged to the entire basic program.

Accordingly, when existing customers of the hardware 90 need a new function, they may be in a situation in which they should purchase the hardware 90 having the new function. Alternatively, the customer may request the addition or update of the new function from the manufacturer of the hardware 90.

Even when the manufacturer actively accepts the customer's request, there is a problem in that it takes a lot of time to update the new function. This is because it is necessary to modify or update the basic program including a robot OS, a runtime, and the like together with function-related codes as a whole in order to add the new function. When the basic program in which the robot OS, the runtime, and the function-related codes are integrated is used to control the hardware 90, there is no method to expand the corresponding function of the hardware 90 even by external other vendors. Describing from another viewpoint, an operation of adding the corresponding function to the robot having no welding function may be practically performed only by the robot manufacturer.

In addition, when the basic program is generally modified in a function update process, it may be difficult to control errors in the software due to various new bugs.

As a result, it is practically difficult to newly add the specific function different from the existing functions to the hardware 90. In addition, it is also practically difficult to delete the existing functions that require the addition of the new function.

In order to add the new functions to various hardware 90, it is necessary to first separate function-related parts and codes from the basic program. In order to achieve the corresponding object, the management apparatus 100 according to the present disclosure proposes a functional module f having a new structure.

As an example, the functional module f described in the present disclosure may include at least one of the control module f1, the framework module f2, and the screen module f3. Preferably, the functional module f includes all of the control module f1, the framework module f2, and the screen module f3. The control module f1, the framework module f2, and the screen module f3 may have the form of a program or software.

In order to implement the function of the hardware 90 performing a specific operation, the control module f1 may control the hardware 90 to perform the corresponding operation. As a result, the control module f1 may generate control information of the hardware 90 or output the control information for the hardware 90.

The screen module f3 may visually display a control operation of the hardware 90 on a display unit. The customer may recognize the operation of the hardware 90 and a state of the hardware 90 through the display unit. Alternatively, the screen module f3 may receive the customer's control value and transmit the control value to the control module.

The framework module f2 may connect the control module f1 and the screen module f3.

The framework module f2 may include a software environment that provides the design and implementation of parts corresponding to the functions of the control module f1 and the screen module f3 in a collaborative form to be reused. In other words, the control module and the screen module may perform their respective functions using the same framework module.

The control module f1 and the screen module f3 may interlock with each other through the framework module f2.

As an example, when the customer moves the robot in a virtual three-dimensional space displayed on the display unit, it may be advantageous for the actual robot to move according to the corresponding movement. At this time, the movement of the robot moving on the display unit should be converted into various control values (a change in an angle of a joint, a change in an angular velocity, and the like) required to move the actual robot. The conversion at this time may be performed by the framework module or performed by the control module. When the corresponding conversion is performed by the control module, the framework module may perform a function of converting a format of information transmitted from the screen module into a format required by the control module.

It is preferable that a reverse operation thereof is also performed normally. It may be preferable that the operation of the robot performing a setting operation be displayed in real time in the virtual three-dimensional space displayed on the display unit. To this end, the movement of the actual robot needs to be converted into coordinate values or the like in the virtual three-dimensional space, and the conversion at this time may be performed by the framework module or the control module. When the corresponding conversion is performed by the control module, the framework module may perform a function of converting the format of information transmitted from the control module into a format required by the screen module.

Practically, the framework module may include various different components that enable solution development, such as support programs, compilers, interpreter libraries, code libraries, and tool sets commonly used in the screen module and the control module. The screen module and the control module using a common component may exchange information compatible with each other. Accordingly, the framework module may be handled as converting heterogeneous information between the screen module and the control module.

The functional module f including all of the above-described control module f1, framework module f2, and screen module f3 has all elements that give specific functions to the robot other than the basic elements, such as runtime and operating system (OS) corresponding to the execution environment. The giving the specific function may mean providing the control information for achieving the specific function to the hardware 90, or mean installing and mounting the functional module f that outputs the corresponding control information in the management unit or control unit of the hardware such as a robot, an AMR, or a manipulator. According to the present disclosure, the functional module may be in a state of being separable from the basic elements such as the control unit 110 and the OS of the management unit 120. Accordingly, when characteristic information of the hardware 90 is provided from the manufacturer of the hardware 90, not only the manufacturers of the hardware 90 but also various vendors may manufacture the functional module.

The functional module f manufactured by various vendors may be registered in the market server 190.

The customer may access the market server 190 using the display unit and an input unit of the management unit 120, and download the functional module that provides necessary functions from the market server 190.

The display unit may include various displays on which various information is visually displayed. The input unit may include a keyboard, a mouse, a touch screen, and the like for receiving customer information.

The management unit 120 may extract the screen module, the framework module, and the control module through the analysis of the functional module.

The management unit 120 may first self-install the extracted screen module f3 in the management 120. Accordingly, the management unit 120 may provide a monitoring environment for the newly downloaded functional module.

Meanwhile, the management unit 120 may transmit the extracted framework module f2 and control module f1 to the control unit 110. When the previous framework module and the previous control module already installed in the control unit 110 collide with the new framework module f2 and the new control module f1, the management unit 120 may delete the previous framework module and the previous control module from the control unit 110 or request the corresponding deletion operation from the control unit 110. In general, since the newly added function often has the one-to-one correspondence with the hardware 90 element, it is highly likely to collide with the existing function. Accordingly, it is preferable that the existing functional module is deleted when the new functional module is installed. As there may be functions not related to hardware, it should be noted once again that even the newly added function may not necessarily have the one-to-one correspondence with the hardware.

The management unit 120 or the control unit 110 may install the framework module f2 and the control module f1 transmitted to the control unit 110 by the management unit 120 in the control unit 110.

Through the above process, the operation environment of the hardware 90 having the new function and the operation environment for monitoring the corresponding hardware 90 from the viewpoint of the new function can be equipped.

Meanwhile, the management unit 120 and the control unit 110 may be integrally formed. In this case, the display unit and the input unit may also be integrally formed with the control unit 110 of the hardware 90.

According to the management apparatus 100 according to the present disclosure, when an abnormality occurs in the newly added function, the corresponding problem can be solved only by correcting errors included in the functional module. In addition, it is sufficient for each vendor to develop only the functional module without having to develop all kinds of software including OS, runtime, and the like related to the hardware 90 control. Accordingly, each vendor may devote all capabilities only to the development of the functional module, so that the quality and error rate of the functional module can be improved.

Meanwhile, when the functional module is manufactured in a state of being separable from the basic elements such as the OS, runtime, and API of the control unit 110, new functions may be added and deleted, and various vendors may participate in the manufacturing of the functional module.

However, the type and expression method of information expressed in the functional module separated from the basic element may be different from the type and expression method of information handled by the basic element. In order to solve the above problem, the control unit 110 may be additionally equipped with an analysis module 13 and a conversion module 15.

For example, the analysis module 13 may receive control information to move the end effector of the articulated robot by 10 cm in a y-axis direction from the control module.

The analysis module 13 may calculate a rotation angle, a rotation direction, and the like of a robot arm necessary for the end effector to move by 10 cm in the y-axis direction. The rotation angle and movement calculated by the analysis module 13 may be referred to as 'analyzed control information' by the analysis module 13. The analyzed control information may be provided to the conversion module 15.

The conversion module 15 may convert the analyzed control information into a data format that may be received by the robot (hardware 90) of each manufacturer, and provide the converted control information to the corresponding robot. The corresponding robot may rotate the robot arm according to the data input from the conversion module 15, and the end effector installed at an end of the robot arm may move by 10 cm in the y-axis direction due to the corresponding rotation.

According to the above-described analysis module 13 and conversion module 15, the manufacturer of the functional module does not need to know in which direction and by what angle to rotate the robot arm in order to move the end effector by 10 cm in the y-axis direction. However, it is sufficient for each vendor to manufacture the control module for generating final control information, for example, information to move the end effector by 10 cm in the y-axis direction, the framework module related thereto, and the screen module.

According to the management apparatus 100, functional modules having various functions may be provided. A functional module that may be freely mounted on and deleted from the management unit 120 and the control unit 110 may be referred to as a changeable module.

As an example, a functional module or a changeable module for newly teaching the robot or updating a new process method to the robot may be provided.

The management unit 120 or the control unit 110 equipped with the functional module for updating the robot may be referred to as an update unit 650 or an update apparatus 600.

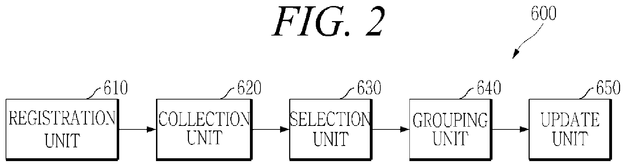

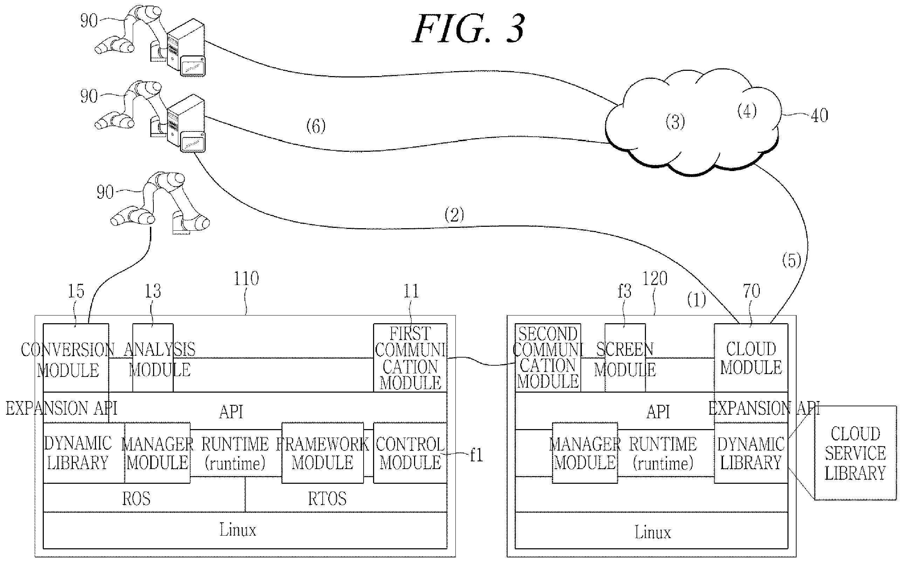

FIG. 2 is a schematic view showing the update apparatus 600 according to the present disclosure. FIG. 3 is a schematic view showing an operation of the update apparatus 600.

A customer who purchases a robot from a manufacturer may dispose the robot at a location at which he/she desires, for example in the fields such as a factory and a laboratory.

The robot once disposed in the field may be set in a state suitable for the field. The robot whose setting is completed may be in a state of normally performing functions desired by the customer. In this state, updates such as various function improvements and bug fixes provided by the manufacturer may not be necessary. Rather, errors may also occur in the normally performed previous operation due to the new update. Accordingly, simultaneous updates to the robot may be unreasonable practically. In addition, in order to protect the robot from various hacking, the robot may use an internal network such as an intranet cut off from the outside. In this case, it is difficult to update at the level of each manufacturer who has no choice but to use an external network.

However, there may be a case in which it is advantageous to internally update a plurality of robots at once. For example, it may be necessary to change a first operation of a plurality of robots disposed in a factory to a second operation. It may be difficult to perform simultaneous updates due to the above reasons. Accordingly, when it is necessary to update the plurality of robots, the customer needs to perform the update while searching for the robots one by one with the storage medium in which update information is stored. In order to solve the inconvenience, the update apparatus 600 shown in FIG. 2 may include a registration unit 610, a collection unit 620, a selection unit 630, a grouping unit 640, and an update unit 650.

The registration unit 610, the collection unit 620, the selection unit 630, the grouping unit 640, and the update unit 650 may be installed in the robot. Specifically, the registration unit 610, the collection unit 620, the selection unit 630, the grouping unit 640, and the update unit 650 may be included in a cloud module 70 mounted on the management unit 120 of the robot.

The grouping unit 640 may group a plurality of robots using the same network or the same cloud 40 into one group.

The update unit 650 may update the plurality of grouped robots through a corresponding network. The update performed by the update unit 650 may mean providing and installing at least one of the functional module, the process information, and the teaching information to the robot.

It should be noted once again that the update apparatus 600 according to the present disclosure is not formed in a separate server but is formed in the management unit 120 of the robot. Accordingly, the grouping unit 640 and the updating unit 650 may be provided in a specific robot among the plurality of robots.

When the grouping unit 640 and the update unit 650 are provided in the management unit 120 of the specific robot, the registration unit 610 may register only the specific robot among the plurality of robots on the network. The registration unit 610 may also be provided in the management unit 120. It is sufficient that the collection unit 620, the selection unit 630, the grouping unit 640, and the update unit 650 of the update apparatus 600 are provided only in the management unit 120 of the specific robot, whereas it is preferable that the registration unit 610 is provided in the management units 120 of all robots to be updated . Of course, the collection unit 620, the selection unit 630, the grouping unit 640, and the updating unit 650 may also be provided in the plurality of robots. In this case, the customer will be able to perform the update on any robot.

When the registration unit 610 has the authority to access not only its own robot but also other robots connected to the network, the customer may register the plurality of robots using only the registration unit 610 provided for the specific robot. In this case, it may be sufficient that the registration unit 610 is provided only for the specific robot.

The collection unit 620 may collect a pieces of robot information registered in the network. The collected results may be displayed through a display unit such as a display provided in the management unit 120.

The selection unit 630 may select robot information to be grouped among the pieces of robot information.

The grouping unit 640 may group the robot information selected by the selection unit 630 into one and set the grouped robot information to a specific group.

The update unit 650 may update the robot corresponding to the robot information included in the specific group.

As described above, the assembling unit 620 and the selection unit 630 may be provided in the management unit 120 of the specific robot among the plurality of robots. The management unit 120 may be provided with a display unit configured to display the pieces of robot information collected by the collection unit 620.

At this time, the selection unit 630 may select at least some of the pieces of robot information displayed through the display unit. For example, when the customer draws a circle with his or her finger on a touch screen, the selection unit 630 may select a robot existing in the circle. The robots selected as described above may be set to one group by the grouping unit 640. The plurality of robots grouped into one group may be updated to have the same version and the same process by the update unit 650.

The update unit 650 may display an inquiry menu when the specific robot among the plurality of grouped robots is updated.

The inquiry menu may include a menu for inquiring a user whether to execute an update for another robot among the plurality of grouped robots. Incorrect updates in the operating field may cause serious errors. Accordingly, a stabilization apparatus may be provided to allow the customer or the user to once again confirm which robot is to be updated remotely. The above menu for inquiring the user may function as a kind of safety device.

Through the menu displayed by the customer, a communication state to receive update information and the like may be checked together.

As an example, the plurality of robots may be grouped into a first group.

At this time, when a first robot in the first group is updated, the update unit 650 may transmit guide information indicating the fact that the update is performed for the first robot to a second robot in the first group.

When it is confirmed that the second robot has received the guide information, the update unit 650 may display the inquiry menu for inquiring whether to update the second robot. According to this embodiment, when the inquiry menu is displayed, it may mean that the second robot has received the guide information. In other words, this may indicate that the second robot maintains the communication state of receiving update information and the like through the first robot and the network in order.

Countermeasures for preventing updates to erroneously selected robots may be added.

The update unit 650 may display the inquiry menu whenever confirmation information indicating the fact that the guide information has been received from each robot included in the first group is received. The inquiry menu at this time may include identification information of each robot. In addition, the inquiry menu may include a menu for inquiring whether to update the robot corresponding to the identification information. According to the inquiry menu, the customer may confirm the identification information of the robot. When the customer confirms the identification information and determines that an update is needed, the customer may select an update start included in the inquiry menu.

When the management unit 120 of the robot is connected to the network, the update information may be received through a second communication module of the management unit 120. The management unit 120 may transmit the update information to the control unit 110 of the robot that communicates with the second communication module. When a manager module of the management unit 120 includes contents related to the software installed in the management unit 120 in the update information, the manager module may update the screen module f2, the runtime, the expansion API, the dynamic library, and the like mounted on the management unit 120 by extracting the corresponding content.

The control unit 110 of the robot may receive update information through a first communication module 11. The manager module provided in the control unit 110 may update the control module f1, the framework module f2, the runtime, the expansion API, the dynamic library, and the like mounted on the control unit 110 by analyzing the update information.

The above operation of the update apparatus 600 may be as shown in FIG. 3 when viewed from the viewpoint of the customer.

The customer may access the cloud 40 (network) through the cloud module 70 mounted on the management unit 120 and register robot information (model name, operation information, process information, and the like) on the cloud 40 (1).

The cloud module 70 may collect robot information registered by other robots on the same network (2).

The robots on the same network may be registered on the cloud 40, and displayed on the display unit through the cloud module 70 and the screen module (3). At this time, information of each robot and process information may be displayed on the display unit (4).

The robots in the same network are displayed through the cloud module 70, and the customer may group the robots into a specific group using the input unit. The robots grouped as described above may be in a state of being updated at the same time by selecting the same version and the same process (5).

When one robot selected in the same group is updated, the other robots in the corresponding group may also recognize the update and inquire about whether to proceed with the update through the display unit. When the user agrees, the other robots in the group may be updated by using the network (6).

Meanwhile, the update for the specific robot may fail due to various problems such as communication delay. The update apparatus may be provided with countermeasures against the update failure.

As an example, when the update for the specific robot fails, the update unit 650 may repeatedly attempt to update the specific robot by a set number of times. The set number may be set by the customer (user). Repetition of the set number of times may be applied when the corresponding update fails after the initial update has been attempted. Accordingly, when the set number of times is 5, the total number of attempts for the update of the specific robot may be 6 by adding the set number of 5 times to at least one attempt.

The update unit 650 may classify the specific robot as a failed robot in which the update fails when the update of the specific robot fails despite repeated attempts to update.

The update unit 650 may restore a software version of the failed robot to a version prior to the update so that the failed robot may operate at least in a state prior to the update. Meanwhile, in order to notify the user of the failure to update the failed robot, the update unit 650 may display the failed robot through the display unit. A user who recognizes the failed robot through the display unit may determine whether to retry the update for the failed robot or exclude the failed robot from the corresponding group.

It is preferable that sporadically occurring failed robots are displayed separately from success robots that have been successfully updated.

As an example, when the plurality of robots are grouped into the first group, the update unit 650 may group the success robots whose updates have been successfully performed among the plurality of robots included in the first group into a success group and display the success group.

The update unit 650 may group the failed robots into a failure group among the plurality of robots included in the first group and display the failure group. In this case, the update unit 650 may display the failure group so as to be distinguished from the success group. Accordingly, the user may first easily distinguish the success group from the failure group. In addition, it is easy to distinguish between the robots that have been successfully updated and the robots whose updates have failed. The user may take appropriate action on the failed robot according to the distinguished result.

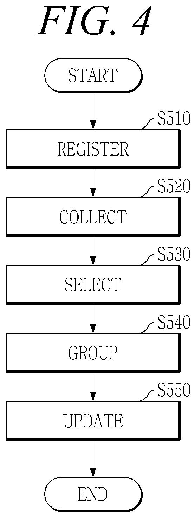

FIG. 4 is a flowchart showing an update method according to the present disclosure.

The update method in FIG. 4 may be performed by the update apparatus 600 shown in FIG. 2.

The update method may include a registering operation (S510), a collecting operation (S520), a selecting operation (S530), a grouping operation (S540), and an updating operation (S550).

The registering operation (S510) may register robot information on the network. The registering operation (S510) may be performed by the registration unit 610.

The collecting operation (S520) may collect the robot information registered in the network. The collection operation (S520) may be performed by the collection unit 620.

In the selecting operation (S530), at least some of the pieces of the collected robot information may be selected. The selecting operation (S530) may be performed by the selection unit 630.

In the grouping operation (S540), the selected robots may be grouped into one group. The grouping operation (S540) may be performed by the grouping unit 640.

In the updating operation (S550), when the specific robot included in the group is updated, an update may be attempted for the remaining robots included in the group using the network. The updating operation (S550) may be performed by the update unit 650.

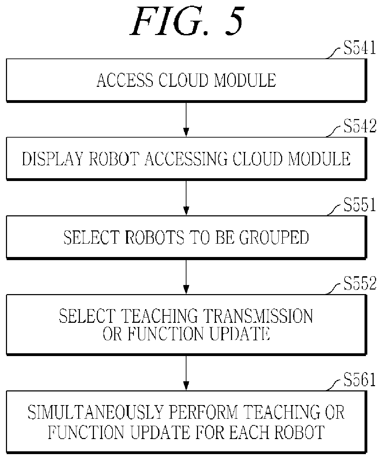

FIG. 5 is a flowchart showing an update method viewed from the viewpoint of a customer.

It is possible to access the cloud module 70 through the management unit 120 of the customer's specific robot (S541). As an example, the customer may use the cloud module 70 by inputting an ID and a password through the input unit of the management unit 120. Alternatively, the customer may input an ID and a password through a separate terminal that communicates with the management unit 120 and use the cloud module 70 mounted on the management unit 120.

The cloud module 70 may display the robot accessing through the network (S542).

The customer may select robots to be grouped through a selection menu provided by the cloud module 70 (S551).

The customer may select a teaching transmission or a function update (S552). In this case, the teaching or function update implemented for a current robot or a current management unit 120 may be transmitted to other grouped robots (S561).

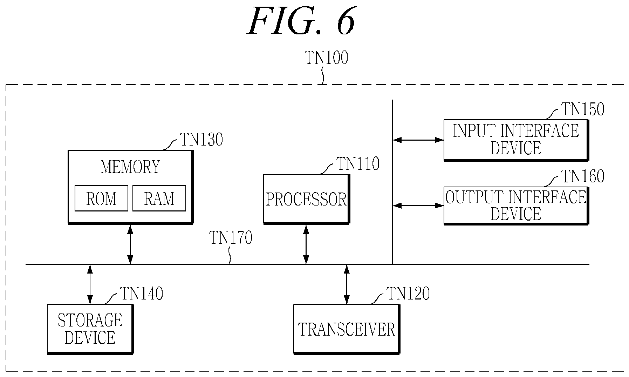

FIG. 6 is a view showing a computing apparatus according to an embodiment of the present disclosure. A computing apparatus TN100 in FIG. 6 may be an apparatus (e.g., the update apparatus 600) described herein.

In the embodiment of FIG. 6, the computing apparatus TN100 may include at least one processor TN110, a transceiver TN120, and a memory TN130. In addition, the computing apparatus TN100 may further include a storage device TN140, an input interface device TN150, an output interface device TN160, and the like. Components included in the computing apparatus TN100 may be connected by a bus TN170 to communicate with each other.

The processor TN110 may execute a program command stored in at least one of the memory TN130 and the storage device TN140. The processor TN110 may mean a central processing unit (CPU), a graphics processing unit (GPU), or a dedicated processor on which methods according to an embodiment of the present disclosure are performed. The processor TN110 may be configured to implement procedures, functions, and methods described in connection with an embodiment of the present disclosure. The processor TN110 may control each component of the computing apparatus TN100.

Each of the memory TN130 and the storage device TN140 may store various information related to the operation of the processor TN110. Each of the memory TN130 and the storage device TN140 may be configured as at least one of a volatile storage medium and a nonvolatile storage medium. For example, the memory TN130 may be configured as at least one of a read-only memory (ROM) and a random access memory (RAM).

The transceiver TN120 may transmit or receive a wired signal or a wireless signal. The transceiver TN120 may be connected to a network to perform communication.

Meanwhile, the embodiment of the present disclosure is not implemented only through the apparatus and/or method described so far, and may also be implemented through a program for realizing the function corresponding to the configuration of the embodiment of the present disclosure or a recording medium in which the program is recorded, and the implementation may be easily achieved by those skilled in the art to which the present disclosure pertains from the description of the above-described embodiment.

Although the embodiment of the present disclosure has been described above in detail, the scope of the present disclosure is not limited thereto, and various modifications and improvements by those skilled in the art using the basic concept of the present disclosure defined by the appended claims also belong to the scope of the present disclosure.

## Claims

1. An update apparatus comprising:
a grouping unit configured to group a plurality of robots using a network; and
an update unit configured to update the plurality of grouped robots through the network.

2. The update apparatus of claim 1,
wherein the grouping unit and the update unit are provided in a specific robot among the plurality of robots.

3. The update apparatus of claim 1,
wherein the update provides at least one of a functional module, process information, and teaching information to the robot.

4. The update apparatus of claim 1,
wherein when the grouping unit and the update unit are provided in a management unit of a specific robot,
a registration unit configured to register only the specific robot among the plurality of robots on the network is provided in the management unit.

5. The update apparatus of claim 1,
wherein a collection unit configured to collect a pieces of robot information registered in the network, and a selection unit configured to select robot information to be grouped among the plurality of collected robot information are provided,
the grouping unit groups the robot information selected by the selection unit into one to set the robot information to a specific group, and
the update unit updates a robot corresponding to the robot information included in the specific group.

6. The update apparatus of claim 5,
wherein the collection unit and the selection unit are provided in a management unit of a specific robot among the plurality of robots,
the management unit is provided with a display unit configured to display the pieces of robot information collected by the collection unit, and
the selection unit selects at least some of the pieces of robot information displayed through the display unit.

7. The update apparatus of claim 1,
wherein when updating a specific robot among the plurality of grouped robots, the update unit displays an inquiry menu for inquiring a user whether to update another robot among the plurality of grouped robots.

8. The update apparatus of claim 1,
wherein when the plurality of robots are grouped into a first group,
the update unit transmits guide information indicating the fact that the first robot has been updated to a second robot in the first group when updating a first robot in the first group, and
the update unit displays an inquiry menu for inquiring whether to update the second robot when confirming the fact that the second robot has received the guide information.

9. The update apparatus of claim 8,
wherein the update unit displays the inquiry menu for inquiring whether to update a robot corresponding to identification information together with the identification information of each robot whenever receiving confirmation information indicating the fact that the guide information has been received from each robot included in the first group.

10. The update apparatus of claim 1,
wherein the update unit repeatedly attempts to update a specific robot by the set number of times when the update of the specific robot fails,
the update unit classifies the specific robot as a failure robot whose update has failed when the update to the specific robot fails despite the repeated attempts to update,
the update unit restores a software version of the failure robot to a previous version, and
the update unit displays the failure robot.

11. The update apparatus of claim 10,
wherein when the plurality of robots are grouped into a first group,
the update unit groups a success robot whose update has been successfully performed among the plurality of robots included in the first group into a success group and displays the success group, and
the update unit groups the failure robot among the plurality of robots included in the first group into a failure group and displays the failure group so as to be distinguished from the success group.

12. An update method performed by an update apparatus, the method comprising:
a registering operation of registering robot information on a network;
a collecting operation of collecting the robot information registered on the network;
a selecting operation of selecting at least some of the pieces of collected robot information;
a grouping operation of grouping the selected robots into one group; and
an updating operation of attempting to update the remaining robots included in the group using the network when a specific robot included in the group is updated.

13. The method of claim 12,
wherein the updating operation displays an inquiry menu for inquiring a user whether to update another robot among a plurality of grouped robots when a specific robot among the plurality of grouped robots is updated.

14. The method of claim 12,
wherein when the plurality of robots are grouped into a first group,
the updating operation transmits guide information indicating the fact that a first robot has been updated to a second robot in the first group when the first robot in the first group is updated, and
the updating operation displays an inquire menu for inquiring whether to update the second robot when confirming the fact that the second robot has received the guide information.

15. The method of claim 12,
wherein the updating operation repeatedly attempts to update the specific robot by the set number of times when the update to the specific robot fails,
the updating operation classifies the specific robot as a failure robot whose update has failed when the update to the specific robot fails despite repeated attempts to update,
the updating operation restores a software version of the failure robot to a previous version, and
the updating operation displays the failure robot.
